# EUROPEAN PATENT SPECIFICATION

(11) **EP 0 565 098 B1**
(45) Date of publication and mention of the grant of the patent: **28.05.1997**
(21) Application number: 93105807.7
(22) Date of filing: 08.04.1993
(51) Int. Cl.: A21B 3/07, A21C 9/08, A21C 13/00, A21C 9/00

(54) **Apparatus and method for continuously treating products**
Vorrichtung und Verfahren zur kontinuierlichen Behandlung von Produkten
Appareil et procédé pour le traitement en continu de produits

(30) Priority: 10.04.1992 CH 1176/92
(43) Date of publication of application: 13.10.1993
(73) Proprietor: SOREMARTEC S.A., 6700 Arlon-Schoppach (BE); Ferrero S.p.A., I-12051 Alba (Cuneo) (IT); FERRERO OFFENE HANDELSGESELLSCHAFT m.b.H., D-60599 Frankfurt (DE)
(72) Inventor: Ferrero, Pietro, B-1640 Rhode St.Genese (BE)
(74) Representative: Bosotti, Luciano

(56) References cited:
- AT-A- 376 106
- FR-A- 2 121 819
- FR-A- 2 176 324
- FR-A- 2 424 705
- FR-A- 2 521 110
- GB-A- 2 217 170

## Description

The present invention relates in general to apparatus intended to subject a flow of products to a treatment which extends over a period of time.

The invention has been developed with particular concern for its possible use in the food industry.

In this field, for example, in the sweetmeat industry, a need is often felt to subject certain products which advance in a continuous or substantially continuous flow, for example, in ordered rows, to a treatment which is prolonged over a certain period of time.

This is the case, for example, in raising or maturing or resting treatments to which some products to be baked must be subjected, or in cooling and solidification treatments to which some chocolate or chocolate covered products must be subjected. The above examples are naturally only some possible examples given that a meticulous list of such treatments would be somewhat lengthy.

Moreover, it should be noted that substantially similar problems also arise in other industrial sectors, for example, in the dehydration, drying, or cooling of very different products.

Currently, the solution normally adopted in industry is to introduce the flow of products into lines or tunnels in which the products are subjected to the desired treatment (with reference to the examples given above: raising, maturing, cooling etc). This solution has the serious disadvantage that the line or tunnel in question must have a length which is practically equal to the product of the speed of advance of the flow and the duration of the treatment time.

Now, the length of the treatment time (linked to physical parameters which it is often difficult, if not impossible, to influence) can be rather long (even several tens of minutes). On the other hand, the speed of advance of the products is closely linked to the capacity of the installation: to increase this latter there is therefore an increasing tendency to increase the speed of advance of the products even further.

This situation results in a need for treatment tunnels or lines of considerable length (several tens or hundreds of metres) which creates considerable problems in developing the layout of the plant and the installations.

At least in principle, this disadvantage can be reduced by adopting, in place of lines or tunnels of overall rectilinear form, lines or tunnels constituted by several branches in cascade connected together by end transfer units so as to give the line or tunnel a generally zig-zag or serpentine plan.

More specifically the present invention relates to apparatus according to the preamble of Claim 1, which is known, e.g. from AT-A-376 106.

In that respect, also FR-A-2 176 324 is of interest for the invention.

Even excluding the objective difficulty of providing end transfer units which are truly efficient and reliable, above all for use with products advancing at high speeds, the various arrangements of the prior art do not in any event fully solve the problem of the large floor space taken up by the line or tunnel.

The present invention therefore sets out to provide means which are capable of eliminating the aforesaid disadvantages in a radical manner.

According to the present invention, this object is achieved by apparatus having the characteristics set out specifically in the characterising portion of Claim 1.

A further subject of the present invention is a method for the use of this apparatus as set forth in Claim 9.

As will be better understood from the following description, one of the principal advantages of the invention derives from the possibility of providing treatment units in which the generally horizontal movement of the products is replaced by a reciprocating movement (rising and falling) in a vertical direction, starting from an input end and leading to an output end of the apparatus. All this is achieved in conditions such that, in general principle for a given distance between the input and output ends, (thus with apparatus having the same length in plan) it is possible to provide different extents of movement in a vertical direction and hence different treatment times.

In this way, the designer of the equipment can provide treatment units which have fixed dimensions in plan, uniquely determined and largely independent of the characteristics of the treatment, whilst at the same time providing treatment units whose overall dimensions are much smaller than those of lines or tunnels with a generally horizontal development, such as those currently in use.

The invention will now be described purely by way of non-limitative example with reference to the appended drawings, in which:-
Figure 1 illustrates schematically a general plan view of a possible arrangement for fitting apparatus according to the invention into a product treatment line;
Figure 2 is a first vertical sectional view of a basic device layout substantially resembling the arrangement of AT-A-376 106
Figure 3 is a section taken on the line II-II of Figure 2;
Figure 4 illustrates a possible embodiment of the apparatus according to the invention;
Figure 5 is a section taken on line V-V of Figure 4; and
Figures 6a to 6l illustrate schematically the use of the device of Figures 4 and 5 on the basis of the process according to the invention.

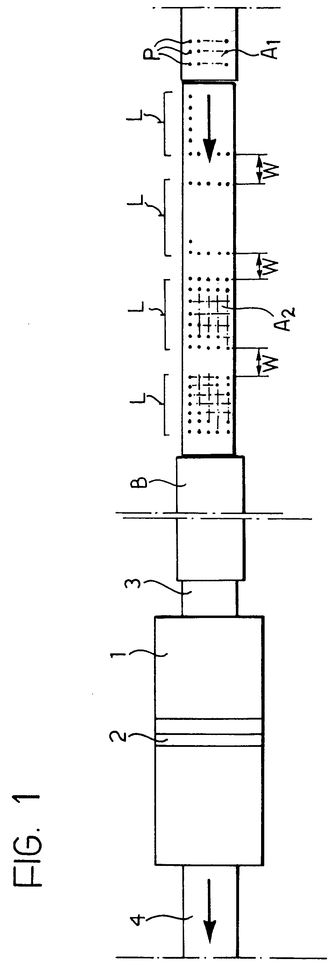

In the plan view of Figure 1 can be seen three treatment units which may be present, for example, in a line for the production of food articles such as, for example, chocolate-covered products.

However, as already discussed above, the present invention can be used in very different industrial fields: in general in all those situations in which the problem arises of subjecting articles which advance in a more or less continuous stream to a treatment intended to last over a certain period of time.

In the specific case of Figure 1, the reference A1 indicates a first conveyor (for example a driven conveyor belt) which carries a continuous, or substantially continuous, stream of products P arranged in rows, that is to say, in lines oriented perpendicular to the direction of advance of the stream. The reference A2 indicates a further conveyor (again, this may be an endless motor-driven belt) in cascade with the conveyor A1 and serving as a spacer belt, that is, a belt which can divide the continuous stream of products P coming from the belt A1 into a stream of batches L of products separated by intervals or empty spaces identified by the distance W in Figure 1: all this is achieved in accordance with criteria well known in the art and such as not to need describing here, particularly as they are not relevant for the purposes of an understanding of the invention.

The products P, subdivided into batches L, are then fed to a further treatment machine B.

By way of example, the products P can be thought of as biscuits or wafers or sweet products with a pastry or wafer shell and the machine B as an enrobing machine, that is, a machine intended to deposit an outer coating, for example of chocolate, on the products P.

In this case the apparatus 1 of the invention may be constituted by a cooling tunnel within which the products P enrobed in the machine B must remain for a period of time (for example 10 mins) such as to allow the chocolate coating (which is obviously applied hot) to cool.

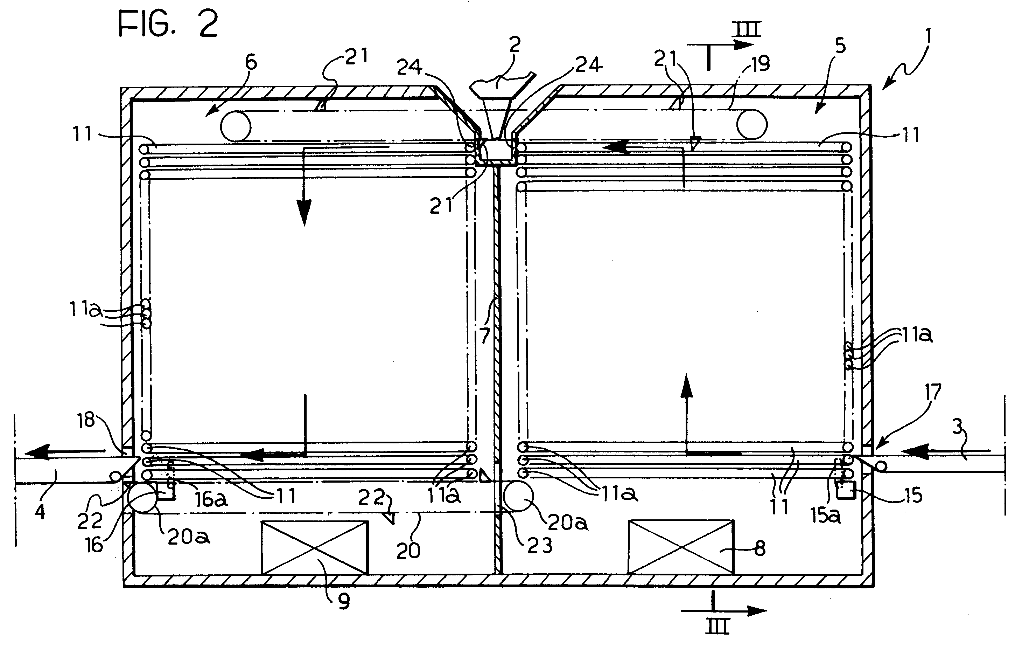

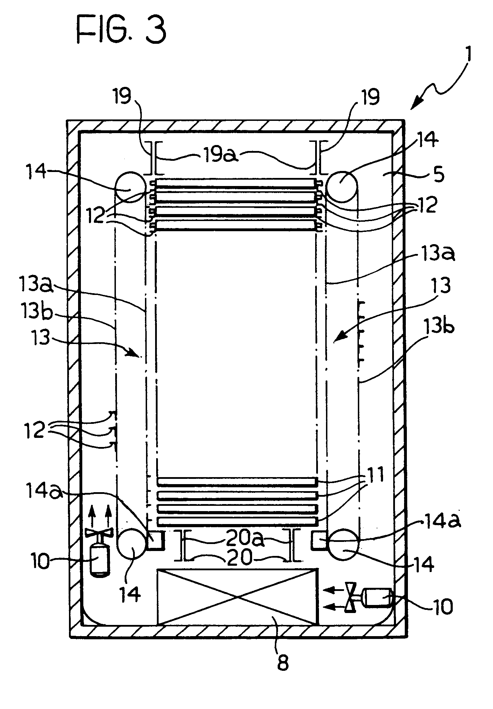

In the specific case of the arrangement of Figures 2 and 3, it is also envisaged that a decoration will be applied to the enrobed products (for example chocolate of a clearly distinct colour) within the apparatus 1, delivered for example by a dropping or pouring machine 2 of known type.

The products leaving the enrobing machine B are fed to the apparatus 1 by an input conveyor 3 whilst the products leaving the apparatus 1 are taken up by an output conveyor 4.

Naturally, the input and output conveyors 3 and 4 are usually also motor-driven belt conveyors. The driven belts 3 and 4 could, however, be replaced by different types of conveyor (for example, belt or chain conveyors).

Turning first to an examination of the solution of Figures 2 and 3, the apparatus 1 can essentially be likened to a tower structure having a certain vertical extent (for example of the order of 4 metres, if the overall length of the apparatus 1 itself - that is, from the output of the input belt 3 to the input to the output belt 4 - is of the order of 6 metres).

This tower structure can ideally be seen as constituted by two chambers 5 and 6, disposed side-by-side, one upstream of the other in the general direction of advance of the stream of products (from right to left as seen in Figures 1, 2, 4 and 6).

For reasons which will become clearer below, the upstream chamber 5 will be called the "up-chamber" whilst the downstream chamber 6 will be called the "down-chamber".

In the illustrated solution the two chambers in question are separated by a vertical partition 7 which makes it possible to achieve different treatment conditions within the two chambers 5 and 6.

For example, if the apparatus 1 is - as has been indicated above - a tunnel for cooling chocolate-coated products, the up-chamber 5 can be maintained at a temperature such as to encourage a first cooling of the chocolate layer applied to the products P without, however, leading to the final solidification thereof. This is with a view to the application of a decoration by the pouring machine 2 situated at the top of the casing of the apparatus above the partition 7, that is, in the region connecting the upper end of the up-chamber 5 to the upper end of the down-chamber 6. The interior of the chamber 6 can, instead, be maintained at a lower temperature to encourage the final cooling and solidification of the chocolate layer, with tempering thereof and of the decoration applied to it.

To this end, temperature stabilising means (for example heat exchangers) 8,9 can be provided in the chambers 5 and 6, separate from each other and controlled in a differentiated manner, whilst pump means 10 (Figure 3) can be arranged in both chambers to encourage the circulation of air within the chambers 5,6 and achieve uniform ambient conditions within them.

As can be better seen in Figure 3 (which relates to the structure of the up-chamber 5 - a structure reproduced, however, in an almost identical manner in the down-chamber 6), each chamber of the apparatus 1 includes a stack of superposed trays 11 (more than 20 in the embodiment illustrated, but the number is not in any way limitative) the side edges of which extend in the general direction of advance of the products P and rest on bracket formations 12 carried by two chain structures 13. Each of these structures has a generally closed loop configuration and, at the top and bottom respectively of the stack of trays 11, passes over respective driven pulleys or rollers 14 having horizontal axes oriented in the direction of advance of the products P. Each chain formation 13 thus has an inner pass 13a, from which the bracket formations 12 which support the trays 11 project, and an outer pass 13b the bracket formations 12 of which face outwardly of the apparatus 1 and are free.

The reference numeral 14a indicates drive means which control incremental rotation of the corresponding pulleys (usually the pulleys 14 situated at the lower ends of the chains 13) through angular increments corresponding in practice to the separation distance between two adjacent trays 11 in the stack. In particular, in the up-chamber 5, the sense of rotation of the pulleys is chosen such that the inner passes 13a move upwards in incremental steps with the consequent downward movement of the outer passes 13b.

In other words in the up-chamber 5, each bracket formation 12 on the chain 13 is able, when it comes to face inwardly of the apparatus on passing around the associated lower pulley 14, to engage one of the longitudinal sides of an associated tray 11 so as to support it and, as a result of the incremental movement of the associated chain 13, to raise the tray 11 itself generally up to the top of the stack.

At this point, having disengaged from the corresponding tray 11 (as will be better described below), the bracket formation 12 passes over the upper pulley 14 of the respective chain 13 and then descends again towards the lower pulley 14 along the outer pass 13b of the chain itself.

In an entirely complementary arrangement, in the down-chamber 6 the movement of the chains 13 is controlled in such a way as to result in a downward movement (also stepwise) of the inner passes 13a of the chains, the bracket formations of which support the trays 11 received (as will be seen better below) at the top of the chamber 6 to carry them gradually to the bottom of this chamber. The outer passes 13b of the chains 13 in the chamber 6 however, move upwardly, so as to carry the respective bracket formations 12, which have released the trays 11 at the bottom of the chamber, to the top of the chamber 6 where they can receive new trays 11.

Naturally the incremental rotational movement of the chains 13 situated on opposite sides of each stack of trays 11 is synchronized in such a way that the bracket formations 12 intended to cooperate with the same tray 11 are at exactly the same height so as to maintain the tray 11 itself in an exactly horizontal position.

As is better seen in Figure 2, each tray 11 usually has a length (in the direction of advance of the products) of a certain extent, for example, of the order of 2.5 - 3 metres.

Consequently, each of the chambers 5 and 6 is usually provided with several sets of chains 13 for providing suitable support for the trays 11.

For example, in a preferred embodiment, each stack of trays 11 (both in the up-chamber 5 and in the down-chamber 6) is provided with at least three pairs of support and drive chains, with two pairs of chains close to the ends of the trays 11 and a third pair located in a central position.

As can better be appreciated from the side view of Figure 2, each tray 11 has the characteristics of an individual conveyor element preferably being constituted by an endless belt passing over respective end pulleys or rollers 11a, (with the further provision of intermediate supporting wheels or rollers not explicitly shown in the drawings) intended in particular to support the horizontal length of the upper pass of each belt so as to prevent its downward curving under gravity.

Naturally the trays 11 can be constituted by conveyor structures of a different nature from that of a belt or mat: for example, bands, chains or meshes.

The reference numerals 15 and 16 indicate two motor units disposed in the lower portion of the casing of the apparatus 1, respectively close to the inlet opening 17 which faces the feed belt 3 and close to the outlet opening 18 which faces the discharge belt 4.

The function of the motor units 15 and 16 is essentially that of cooperating selectively, for example via gear trains driven by belt or chain transmissions indicated 15a and 16a respectively for the two chambers 5 and 6, with one of the end rollers or pulleys of the two conveyors/trays 11 which (according to criteria more fully described below) are located instantaneously in alignment with the input conveyor 3 (at the lower end of the up-chamber 5) and with the output conveyor 4 (at the lower end of the down-chamber 6). This is to allow the movement of the belt constituting the tray 11, with the consequent transfer of the products P:
- from the input conveyor 3 to the tray 11 facing it immediately downstream of the inlet opening 17 (in the up-chamber 5), and
- from the tray 11 aligned at that moment with the outlet aperture 18 to the output conveyor 4 (in the down-chamber 6).

The reference numerals 19 and 20 indicate two further drive units, usually constituted by a pair of driven chains (the associated drive means are not directly visible in the drawings) mounted in closed loops passing over respective end pulleys 19a, 20a. These chains are provided with drive teeth or dogs 21,22 which can engage the trays 11 so as to apply an entrainment and/or thrust force thereto with the consequent movement of the trays 11 in a horizontal direction.

The drive unit 19 is situated in the upper part of the casing of the apparatus 1; it extends as a bridge between the upper parts of the chambers 5 and 6 with its lower pass ideally touching the plane occupied by the trays 11 in the upper position in the two stacks in the chambers 5 and 6 at any time.

More precisely it is the ideal plane defined by those brackets 12 of the inner passes 13a of the chains 13 which, in the case of the chains disposed in the up-chamber 5, are starting to diverge as they pass over the pulleys 14 in the general movement, upward of the inner passes 13a and the downward of the outer passes 13b and, in the case of the chains 13 in the down-chamber 6, those brackets 12 which after passing the uppermost points in their trajectories around the upper pulleys 14, have approached themselves by the distance between the two inner passes 13a which move downwardly.

The drive unit 20, which has a structure almost identical to that of the drive unit 19, is also located as a bridge between the two chambers 5 and 6 at the lower end thereof, and extends through a corresponding aperture 23 provided in the partition 7 which separates the two chambers 5 and 6.

A similar aperture, or pair of apertures, 24 is provided in the channel formed at the top end of the casing of the apparatus 1 in correspondence with which the pouring machine 2 applies the decoration to the products.

The apparatus 1 functions in a cyclic sequence which, for each tray 11, provides a "circulation" within a casing of the apparatus 1, with the following phases:
(i) alignment of the tray 11 with the inlet opening 17;
(ii) engagement of the transmission 15a (for example by a frontal-tooth coupling) with one of the end rollers (usually that situated nearer the inlet aperture 17) of the conveyor/tray 11;
(iii) activation of the drive 15 and movement of the upper pass of the tray 11 in substantial synchronization with the movement of the belt 3, which is assumed to move in an almost continuous manner (the various batches L of the products are in fact already spaced from one another by the intervals W) with consequent loading of a batch L of products onto the conveyor/tray; at the end of the loading of the batch of products, the motor 15 stops and the transmission 15a disengages from the conveyor/tray;
(iv) gradual rise of the tray 11 with the products P which are on it within the up-chamber 5; this rising movement occurs incrementally in such a way as to allow batches L of products which arrive from the belt 3 to be loaded onto the trays 11 which face the aperture 17 in turn, the trays being held stationary for the time necessary for the loading of a batch of products onto the conveyor/tray 11 in that position at the time: to this end, the distance W between adjacent batches L is usually arranged, with reference to the speed of advance of the products on the belt 3, such that it corresponds to the time interval needed, after a complete batch L of the products has been loaded onto a conveyor/tray 11, for this same tray 11 to rise through one position within the up-chamber 5 with the consequent rise of a further conveyor/tray 11, intended to receive the subsequent batch L of products, into alignment with the aperture 17;
(v) transfer of the conveyor/tray 11 which has reached the topmost position in the up-chamber 5 into the topmost position in the down-chamber 6; this transfer takes place by the engagement of the tray 11 by the transfer unit 19 and the consequent actuation thereof: in practice, the tray 11 is engaged by drive teeth or dogs 21 and made to slide from the bracket formations 12 of the chains 13 which are located in the up-chamber 5 to the bracket formations 12 which are exactly aligned at the same height by the synchronisation of the drive members of the chains 13 located within the down-chamber 6 in vertical alignment with the other trays 11 located within the down-chamber 6; during passage from the position at the top of the up-chamber 5 to the position at the top of the down-chamber 6 the tray 11 passes beneath the pouring or dropping machine 2 which can thus be activated to decorate the products;
(vi) incremental descent of the tray 11 within the down-chamber 6 in a manner corresponding to that adopted for rising within the up-chamber 5 until the position of horizontal alignment with the outlet opening 18 is reached;
(vii) engagement of one of the end rollers of the conveyor/tray 11 by the transmission 16a associated with the drive 16;
(viii) subsequent actuation of the drive 16 which activates the upper pass of the belt constituting the tray 11 so as to transfer the products located thereon to the output conveyor 4.
(ix) disengagement of the conveyor/tray 11 from the transmission 16a, and subsequent lowering of the tray in question by at least one further position downwardly to a position of engagement with the lower transfer unit 20, the drive teeth or dogs 22 of which engage the tray 11 in question;
(x) transfer of the tray back to the bottom of the up-chamber 5 through the aperture 23 in the partition 7; on completion of the transfer into the chamber 5 (which takes place in practically identical conditions - save naturally, for the direction of movement, which is the opposite to the transfer at the top of the apparatus 1 by the transfer unit 19), the tray 11 is located immediately beneath the tray which at that moment is receiving a corresponding batch of products L from the input conveyor 3; on completion of this loading operation, the chains 13 of the up-chamber 5 perform a new incremental of movement and carry the tray 11 back into alignment with the inlet opening 17, positioning it to receive a new batch of products.

It goes without saying that, because of its cyclic nature, the sequence described above which carries the trays 11 around in a generally closed loop within the apparatus 1, lends itself to actuation simultaneously on different trays 11: thus, for example, whilst one tray is loaded at the inlet opening 17, another can be moved from the top of the rising stack to the top of the descending stack, receiving the decoration, whilst another is unloaded through the outlet opening 18 whilst yet another is retransferred from the bottom of the descending stack to the bottom of the rising stack, beneath the inlet opening 17.

The dwell time of the products P within the apparatus 1 corresponds in practice to the time interval necessary for the conveyor/tray 11 which receives the products themselves to perform the rising movement within the chamber 5, with subsequent transfer to the down-chamber 6 and the descent to the outlet opening 18. The duration of this time interval can be adjusted selectively by varying the speed of the chains 13, the upper limit of this interval being determined by the product of the maximum number of trays 11 which can be stacked within the chambers 5 and 6 and the vertical space occupied by each tray 11 with the products disposed on it. In practice the maximum time interval is determined by the overall height of the apparatus 1.

It should, however, be noted that this parameter is, in the majority of cases, a rather less limiting factor than the horizontal length of the treatment lines or tunnels of the prior art installations.

By way of reference, it can be seen that apparatus such as that illustrated in Figure 2, with a height of the order of about 4 metres, can hold about 25 trays 11 in each of the chambers 5 and 6, which corresponds in practice to the availability of fifty trays 11 simultaneously loaded with respective batches of products P.

Since, as has been mentioned, each tray, in the illustrated embodiment, has a length of about 2½ metres, it can be established that the apparatus 1 of Figure 2 corresponds, from a functional point of view, to a line or tunnel having a length of 50 x 2.5 = 125 metres whilst occupying a length of only 6 metres in plan.

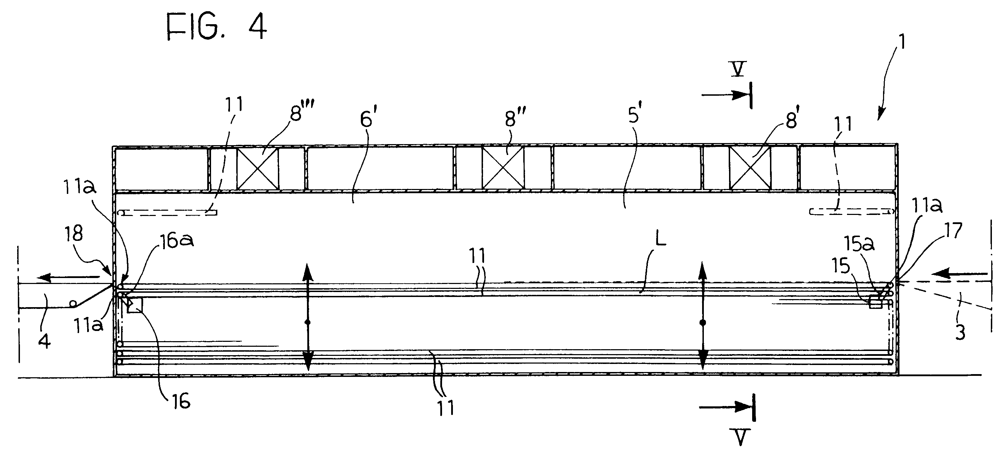

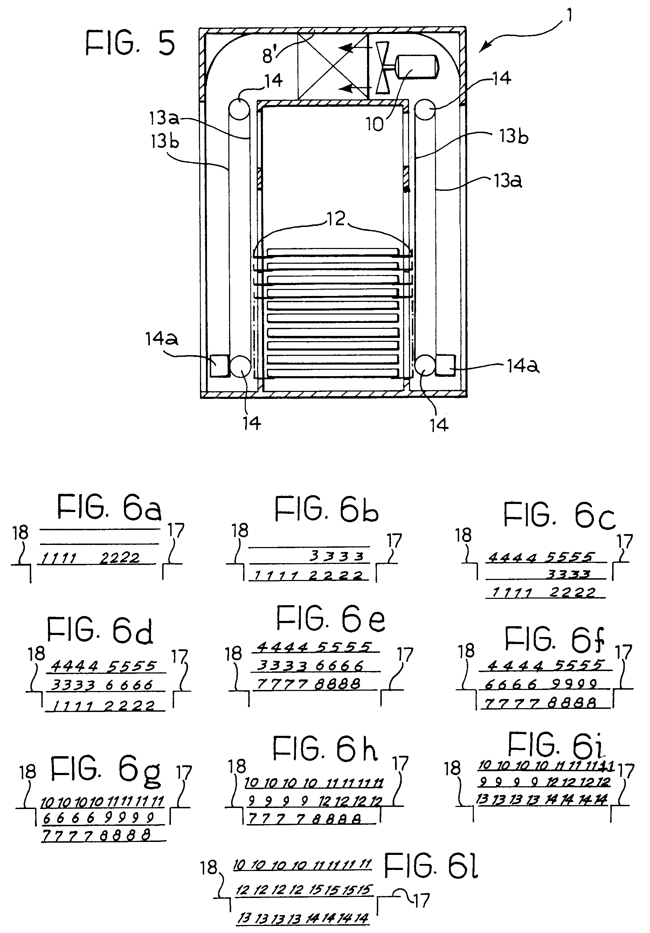

In the arrangement according to the invention, as shown in Figures 4 and 5 the apparatus 1 has a single chamber 5' (generally longer than the chambers 5 and 6 of the embodiment of Figures 2 and 3). To give an idea, in the embodiment of Figure 4, one may consider the casing of the apparatus 1 to have a length about 10 metres in the direction of advance of the products.

An advantage of the apparatus of the invention is the fact that it can be made modular in a vertical sense, in that the same basic configuration, occupying the same space in plan, can be made modular in height (with the provision of height extension sections with associated lengths of the chains 13 and groups of trays) in such a way as to provide different treatment times for specific operational requirements intended to vary with time.

Within the casing defining chamber 5' are heat exchange devices 8', 8'',8''' intended to achieve the necessary ambient conditions envisaged for the treatment of the products which in this case are also fed to an inlet opening 17 from a conveyor 3 and are withdrawn after treatment by an output conveyor 4 through an outlet opening 18.

Again in this case, pump members can be provided (see for example the pump members 10' visible in Figure 5) the function of which is to achieve at least local homogenisation of the ambient conditions within the casing of the apparatus 1.

Again in this case, in fact, one can consider regulating the air conditioning devices 8',8'',8''' in a differentiated manner so as to achieve conditions which vary gradually within the casing of the apparatus 1.

For example, when it is used for a cooling treatment, the air conditioning devices 8' situated close to the inlet opening 17 can be adjusted so as to maintain a temperature at least slightly above that maintained in the outlet region of the casing 1 by the air conditioning elements 8'''.

In the arrangement according to the invention, as shown in Figure 4, the conveyors/trays 11 are made in the form of endless belts (or mats, bands chains, meshes etc) which pass over end rollers or pulleys 11a. Here again the provision of a certain number of intermediate rollers (not illustrated) is envisaged to avoid downward curving of the upper pass of each belt: in this case the horizontal extent of these is in fact greater than that of the trays 11 in the solution of Figures 2 and 3.

For the same reason, it can be useful to provide two drive units 15, 16, naturally synchronised with one another, for driving the belt constituting each tray 11, the drive units being selectively engageable, through respective transmissions 15a, with the end rollers 11a of the conveyor/tray 11 aligned at a particular instant with the inlet opening 17 and with the outlet opening 18 situated at the same height.

As far as the movement of the conveyor/trays 11 in a vertical direction is concerned, in the arrangement of the invention as shown in Figures 4 and 5, the same arrangement already described above is adopted with the use of driven chains 13, the internal passes 13a of which, which face inwardly of the apparatus, carry bracket formations 12 for supporting the trays 11. In this case also, the interior of the casing will have several pairs of chains (each, for example,every 2-2.5 metres) as to ensure adequate support for the trays 11.

By contrast with the solution of Figures 2 and 3, in which the driven chains 13 of each chamber 5,6 always rotate in the same direction (so as to cause upward movement of the inner passes 13a in the up-chamber 5 and downward movement of the corresponding passes in the down-chamber 6), in the arrangement of the invention, as shown in of Figures 4 and 5, the drive members 14a for the chains 13 are made to operate in an alternating manner so as to cause corresponding alternate rising and descending of the stack of trays 11 within the casing of the apparatus 1. In practice, starting from the lowermost position illustrated in solid outline in Figure 4, the stack of trays 11 is gradually raised in steps (according to criteria which will be more fully explained below) until the highest position is reached which is shown schematically in broken outline in Figure 4.

In practice, the lowermost position of the stack occurs when the tray 11 situated at the top of the stack is aligned with the inlet opening 17 and the outlet opening 18. The uppermost position occurs when the tray 11 at the bottom of the stack reaches the position of alignment with the openings 17 and 18.

This latter can, for example include, ten superimposed trays 11.

It goes without saying that, to allow this movement, the casing of the apparatus 1 must enclose a chamber for the movement of the trays 11 having a height equal to about twice the height of the stack of trays 11.

The sequence of Figures 6a - 6l illustrates, with schematic reference to apparatus including only three superposed trays 11, the introductory sequence of the apparatus according to the invention up to the achievement of a steady operating condition.

This is with reference to the sequential treatment of a certain number of batches of products indicated by numerals 1 to 14 progressively.

In principle, each batch (see also the batch indicated L in Figure 4) can be seen as occupying half the horizontal extent of the upper conveyor pass of each tray 11; this is true even, as will be seen, for the two belts 11 located in the end positions of the stack (that is to say the highest tray 11 and the lowest tray 11), the loading and unloading operations in practice involve two batches simultaneously.

The sequence to which Figures 6a - 6l refer will now be explained in more detail:
- Figure 6a: the apparatus 1, initially empty with the stack of trays 11 situated in the highest position (however, this choice is not in any way imperative) is loaded with two batches of products 1 and 2 through the inlet opening 17, these being placed on the lowermost tray 11.
- Figure 6b: the stack of trays 11 is lowered by one position and is loaded a new batch of products 3 onto the tray 11 aligned at this moment with the openings 17, 18 - and more precisely onto the upstream half thereof;
- Figure 6c: the stack of trays 1 is lowered by a further step to bring the uppermost tray into alignment with the openings 17 and 18; the uppermost tray in question is loaded with two batches of products 4, 5;
- Figure 6d: the stack of trays 11 is again raised by one position; the batch 3 which occupied the first part of the intermediate tray is displaced (by movement of the belt constituting the tray 11 in question by means of the motors 15 and 16) onto the second half thereof; simultaneously a new batch of products 6 coming from the inlet opening 17 is loaded onto the upstream half of the same tray;
- Figure 6e: the stack of trays is raised by a further step bringing the lowermost belt into alignment with the openings 17 and 18: the batches 1 and 2 are unloaded and two new batches 7, 8 are loaded onto this bottom tray;
- Figure 6f: the stack of trays is lowered by one position; the batch 3 is unloaded through the outlet opening 18 and a new batch 9 coming from the inlet opening 17 is loaded in (again by the movement of the tray 11 involved, driven by the motors 15 and 16);
- Figure 6g: the stack is in the lowermost position; the batches 4 and 5 are unloaded and two new batches 10, 11 are loaded onto the tray which is in the uppermost position;
- Figure 6h: the stack is again raised by one step; the batch 6 is unloaded, and a new batch 12 is loaded onto the upstream portion of the intermediate tray 11;
- Figure 6i: the stack returns to the uppermost position; the batches 7 and 8 are unloaded, and two new batches 13, 14 are loaded onto the tray in the lowermost position; and
- Figure 6l: the stack is again lowered by one step, the batch 9 is unloaded through the outlet opening 18 whilst a new batch 15 is loaded onto the upstream part of the intermediate tray 11.

The operating sequence described above is able to ensure that each batch of products treated remains for practically an identical period of time within the interior of the apparatus 1.

This sequence can be applied to any number of trays 11 superimposed in a stack and capable of downward and upward movement relative to the inlet and outlet openings 17 and 18.

In practice the sequence described above ensures that, whenever a tray 11 stops - during a rising or descending movement of the stack - in correspondence with the openings 17 and 18, the batch of products situated on the downstream part of the tray is unloaded through the outlet opening 18 while the batch which is on the upstream half is transferred to the downstream half and a new batch of products is loaded onto the upstream half. These three operations take place simultaneously due to the movement of the belt constituting the tray 11 driven by the motor drives 15 and 16.

The same principle also applies as far as the loading and unloading of products onto and from the two trays 11 situated in the end positions of the stack are concerned, that is to say, the top tray 11 and the bottom tray 11 in the stack.

In practice, for these two trays situated in the end positions, alignment with the inlet and outlet openings 17, 18 corresponds:
- for the top tray 11 both to the terminal station of a downward stroke and the initial station of the next upward stroke, and
- for the bottom tray 11, both to the terminal station of an upward stroke and the initial station of the next downward stroke.

Consequently, when these end trays reach alignment with the loading and unloading openings 17, 18, the sequence described previously (unloading of the downstream batch, transfer of the upstream batch to the downstream position, loading of a new batch onto the upstream half of the tray 11) must be repeated twice in sequence, which corresponds in practice to complete unloading of the products which are on the tray 11 and to complete reloading of the tray with new products. (See for example the succession of phases shown in Figures 6d and 6a, in the case of the bottom tray and to the sequence of Figures 6f and 6g in the case of the top tray).

The same procedure as that described above can also be adopted without involving batch of products P such as to occupy a half (downstream or upstream depending on the operation involved) of each tray 11 in each loading and unloading operation.

Above all, for products intended to be subjected to rather lengthy treatments (for example maturing or like treatments) one can consider involving batches of products which correspond to a smaller fraction of the longitudinal extent of each tray 11 (for example a third, a quarter or, in general, 1/n of the tray 11) in each individual loading and unloading operation. In this way, it is possible to increase correspondingly the number of rising and/or descending movements that each individual batch will have to follow within the device 1 before being unloaded through the outlet opening 18.

Naturally, the principle of the invention remaining the same, the details of construction and the embodiments can be widely varied with respect to what has been described and illustrated without by this departing from the ambit of the present invention as defined by the claims.

In particular, although the description provided hereinbefore has made reference to products P placed on trays 11 forming an integral part of the apparatus 1, it is also possible to imagine adopting an arrangement of the invention for products (for example, chocolate products) which are cast and held in respective open or closed moulds which can be introduced into the drive chain of the apparatus 1.

## Claims

1. Apparatus for subjecting a stream of products (P) to a treatment which continues for a period of time, comprising one chamber (5') intended to be traversed by the said products (P) during the said treatment in a movement starting generally from an inlet end (17) and progressing to an outlet end (18); the device including:
- reception means for the products (P) arranged as a plurality of trays (11) forming at least one stack within the chamber (5,6); and
- drive means (13a,13b,14;14a) for imparting a general rising and descending movement to the trays (11) within the chamber (5,6), the rising and descending movements taking place in a period of time corresponding substantially to the treatment time,
characterised in that the said drive means (13a,13b,14,14a) can impart a reciprocating rising and descending movement to the stack of trays (11), which movement brings each tray (11) in sequence into alignment with the inlet end (17) and the outlet end (18); the reciprocating rising and descending movement taking place between a lowermost position, in which the tray (11) situated at the top of the stack is aligned with the inlet end (17) and the outlet end (18), and a highest position in which the tray (11) situated at the bottom of the stack is aligned with the inlet and the outlet ends (17, 18).

2. Apparatus according to Claim 1, characterised in that the trays (11) are movable conveyors (15,16) which can effect a generally advancing movement of the products (P) therealong, whether loose or arranged in open or closed moulds.

3. Apparatus according to Claim 2, characterised in that the trays (11) are movable conveyors in the form of motor-driven belts, bands, chains or meshes.

4. Apparatus according to Claim 2 or Claim 3, characterised in that it includes further drive means (15,16) arranged in generally fixed position with respect to the apparatus (1) and capable of moving selectively into positions of interaction with the trays (11) so as to effect the generally advancing movement of the products,

5. Apparatus according to Claim 4, characterised in that the further drive means (15,16) are disposed in positions generally adjacent the inlet and/or the outlet ends (17,18).

6. Apparatus according to any one of the preceding claims, characterised in that the trays (11) have associated motor-driven (14a) support means (12,13a,13b,14) which can support the trays (11) in a generally stack-like structure and have associated therewith motor means (14a) to act as said drive means to impart to the stacked trays (11) a generally rising or descending movement.

7. Apparatus according to Claim 6, characterised in that the support means include bracket formations (12) for supporting the trays (11); the support means (13) include respective vertical passes (13a) which support the bracket formations (12) for supporting the trays (11) and in that the vertical passes (13a) perform a generally rising and/or descending movement driven by respective motor means (14a).

8. Apparatus according to any one of the preceding Claims, characterised in that it includes environmental conditioning means (;8';8'';8'''10') for maintaining different environmental conditions in different regions within the apparatus itself.

9. A method for the use of the apparatus according to claim 1, characterised in that it includes the operation, whenever one of the trays (11) is aligned with the inlet end (17) and the outlet end (18), of unloading a predetermined quantity of products from the tray (11) in question through the outlet end, loading a corresponding quantity of products onto the tray (11) through the inlet ends (17), with corresponding displacement of the products present on the tray (11) towards the outlet end (18); the said operation being repeated twice in sequence when the tray (11) involved is one of the top or bottom trays of the stack.

10. A method according to Claim 9, characterised in that the said predetermined quantity of products corresponds to the quantity of products received on half the said tray (11).

## Patentansprüche

1. Vorrichtung zur Durchführung einer Behandlung bei einem Strom von Erzeugnissen (P), welche über einen Zeitraum andauert, mit einer Kammer (5), die von den Erzeugnissen (P) während der Behandlung in einer Bewegung durchquert werden soll, die im wesentlichen bei einem Einlaßende (17) beginnt und bis zu einem Auslaßende (18) weitergeht, wobei die Vorrichtung aufweist:
- eine Empfangsvorrichtung für die Erzeugnisse (P), die als mehrere Tabletts (11) ausgebildet ist, welche zumindest einen Stapel innerhalb der Kammer (5, 6) bilden; und
- eine Antriebsvorrichtung (13a, 13b, 14; 14a), um auf die Tabletts (11) eine im wesentlichen ansteigende und eine im wesentlichen absinkende Bewegung innerhalb der Kammer (5, 6) auszuüben, wobei die ansteigenden und absinkenden Bewegungen in einem Zeitraum stattfinden, der im wesentlichen der Behandlungszeit entspricht,
dadurch **gekennzeichnet,** daß die Antriebsvorrichtung (13a, 13b, 14, 14a) eine hin- und hergehende ansteigende und absenkende Bewegung auf den Stapel der Tabletts (11) ausüben kann, wobei die Bewegung jedes Tablett (11) nacheinander in Ausrichtung mit dem Einlaßende (17) und dem Auslaßende (18) bringt, die hin- und hergehende ansteigende und absenkende Bewegung zwischen einer untersten Position, in welcher das Tablett (11), das sich an der Oberseite des Stapels befindet, zu dem Einlaßende (17) und dem Auslaßende (18) ausgerichtet ist, und einer höchsten Position stattfindet, in welcher das Tablett (11), welches sich am Boden des Stapels befindet, zum Einlaßende und Auslaßende (17, 18) ausgerichtet ist.

2. Vorrichtung nach Anspruch 1,
dadurch **gekennzeichnet,** daß die Tabletts (11) als bewegliche Förderer (15, 16) ausgebildet sind, welche eine im wesentlichen Vorschubbewegung der Erzeugnisse (P) entlang den Tabletts bewirken können, ob diese nun lose oder in offenen oder geschlossenen Formen angeordnet sind.

3. Vorrichtung nach Anspruch 2,
dadurch **gekennzeichnet,** daß die Tabletts (11) als bewegliche Förderer in Form motorgetriebener Riemen, Bänder, Ketten oder Gitter ausgebildet sind.

4. Vorrichtung nach Anspruch 2 oder 3,
dadurch **gekennzeichnet,** daß sie weiterhin eine Antriebsvorrichtung (15, 16) aufweist, die im wesentlichen ortsfest in Bezug auf die Vorrichtung (1) angeordnet ist, und selektiv in Positionen der Wechselwirkung mit den Tabletts (11) bewegt werden kann, um so die im wesentlichen Vorschubbewegung der Erzeugnisse hervorzurufen.

5. Vorrichtung nach Anspruch 4,
dadurch **gekennzeichnet,** daß die weiteren Antriebsvorrichtungen (15, 16) an Positionen angeordnet sind, die im wesentlichen neben dem Einlaß- und/oder Auslaßende (17, 18) liegen.

6. Vorrichtung nach einem der voranstehenden Ansprüche,
dadurch **gekennzeichnet,** daß die Tabletts (11) zugeordnete, motorgetriebene (14a) Halterungsvorrichtungen (12, 13a, 13b, 14) aufweisen, welche die Tabletts (11) in einer im wesentlichen stapelförmigen Anordnung haltern können, und welchen eine Motorvorrichtung (14a) zugeordnet ist, um als die Antriebsvorrichtung zu dienen, um auf die gestapelten Tabletts (11) eine im wesentlichen ansteigende oder absinkende Bewegung auszuüben.

7. Vorrichtung nach Anspruch 6,
dadurch **gekennzeichnet,** daß die Halterungsvorrichtung Trägeranordnungen (12) zum Haltern der Tabletts (11) aufweist; die Halterungsvorrichtungen (13) jeweilige Vertikaldurchgänge (13a) aufweisen, welche die Trägeranordnungen (12) zum Haltern der Tabletts (11) abstützen, und daß die Vertikaldurchgänge (13a) eine im wesentlichen ansteigende und/oder absinkende Bewegung durchführen, angetrieben durch die jeweilige Motorvorrichtung (14a).

8. Vorrichtung nach einem der voranstehenden Ansprüche,
dadurch **gekennzeichnet,** daß sie eine Umgebungsklimatisierungsvorrichtung (8'; 8''; 8'''; 10') aufweist, um unterschiedliche Umgebungsbedingungen in unterschiedlichen Bereichen innerhalb der Vorrichtung selbst aufrecht zu erhalten.

9. Verfahren zur Verwendung der Vorrichtung gemäß Anspruch 1,
dadurch **gekennzeichnet,** daß der Vorgang vorgesehen ist, immer dann, wenn eines der Tabletts (11) mit dem Einlaßende (17) und dem Auslaßende (18) ausgerichtet ist, eine vorbestimmte Menge an Erzeugnissen von dem betreffenden Tablett (11) durch das Auslaßende zu entladen, eine entsprechende Menge an Erzeugnissen auf das Tablett (11) durch die Einlaßenden (17) einzuladen, mit entsprechender Verschiebung der auf dem Tablett (11) vorhandenen Erzeugnisse in Richtung auf das Auslaßende (18); wobei der Vorgang zweimal nacheinander wiederholt wird, wenn das betreffende Tablett (11) entweder das oberste oder das unterste Tablett des Stapels ist.

10. Verfahren nach Anspruch 9,
dadurch **gekennzeichnet,** daß die vorbestimmte Menge an Erzeugnissen der Menge an Erzeugnissen entspricht, die aus der Hälfte des Tabletts (11) aufgenommen werden.

## Revendications

1. Appareil pour soumettre un flux de produits (P) à un traitement qui dure pendant un certain temps, comprenant une chambre (5') devant être traversée par lesdits produits (P) durant ledit traitement dans un mouvement partant généralement d'une extrémité d'entrée (17) et progressant jusqu'à une extrémité de sortie (18), l'appareil comprenant :
- des moyens de réception pour les produits (P) agencés en une pluralité de plateaux (11) formant au moins une pile au sein de la chambre (5, 6); et
- des moyens d'entraînement (13a, 13b, 14; 14a) pour imposer un mouvement généralement ascendant et descendant aux plateaux (11) au sein de la chambre (5, 6), les mouvements ascendant et descendant ayant lieu au cours d'une période correspondant sensiblement à la durée du traitement,
caractérisé en ce que lesdits moyens d'entraînement (13a, 13b, 14; 14a) peuvent imposer un mouvement ascendant et descendant alternatif à la pile de plateaux (11), lequel mouvement amène chaque plateau (11) successivement en alignement avec l'extrémité d'entrée (17) et l'extrémité de sortie (18); le mouvement ascendant et descendant alternatif ayant lieu entre une position basse dans laquelle le plateau (11) situé en haut de la pile est aligné avec l'extrémité d'entrée (17) et l'extrémité de sortie (18), et une position haute dans laquelle le plateau (11) situé en bas de la pile est aligné avec les extrémités d'entrée et de sortie (17, 18).

2. Appareil selon la revendication 1, caractérisé en ce que les plateaux (11) sont des transporteurs mobiles (15, 16) qui peuvent donner un mouvement de progression général aux produits (P) le long des transporteurs, que les produits soient libres ou disposés dans des moules ouverts ou fermés.

3. Appareil selon la revendication 2, caractérisé en ce que les plateaux (11) sont des transporteurs mobiles sous la forme de bandes, courroies, chaînes ou grilles entraînées par moteur.

4. Appareil selon la revendication 2 ou la revendication 3, caractérisé en ce qu'il comprend des moyens d'entraînement supplémentaires (15, 16) agencés en une position généralement fixe par rapport à l'appareil (1) et adaptés à un déplacement sélectif en des positions d'interaction avec les plateaux (11) afin de donner le mouvement de progression général aux produits.

5. Appareil selon la revendication 4, caractérisé en ce que les moyens d'entraînement supplémentaires (15, 16) sont disposés en des positions généralement adjacentes aux extrémités d'entrée et/ou de sortie (17, 18).

6. Appareil selon l'une quelconque des revendications précédentes, caractérisé en ce que les plateaux (11) comportent des moyens de support associés (12, 13a, 13b, 14) entraînés par moteur (14a) qui peuvent supporter les plateaux (11) en une structure généralement de pile et comportent des moyens de moteur (14a) qui leur sont associés pour agir en tant que lesdits moyens d'entraînement afin d'imposer aux plateaux (11) empilés un mouvement généralement ascendant ou descendant.

7. Appareil selon la revendication 6, caractérisé en ce que les moyens de support comprennent des projections en consoles (12) pour supporter les plateaux (11); les moyens de support (13) comprennent des bandes verticales respectives (13a) qui supportent les projections en consoles (12) pour supporter les plateaux (11) et en ce que les bandes verticales (13a) ont un mouvement généralement ascendant et/ou descendant entraîné par les moyens de moteur respectifs (14a).

8. Appareil selon l'une quelconque des revendications précédentes, caractérisé en ce qu'il comprend des moyens de conditionnement de l'environnement (8'; 8''; 8''', 10') pour le maintien de différentes conditions environnantes dans différentes zones de l'appareil même.

9. Procédé pour utilisation de l'appareil selon la revendication 1, caractérisé en ce qu'il comprend l'opération, dès qu'un des plateaux (11) est aligné avec l'extrémité d'entrée (17) et l'extrémité de sortie (18), consistant à décharger une quantité prédéterminée de produits du plateau (11) en question va l'extrémité de sortie, charger une quantité correspondante de produits sur le plateau (11) via les extrémités d'entrée (17), avec un déplacement correspondant des produits présents sur le plateau (11) vers l'extrémité de sortie (18); ladite opération étant répétée deux fois en séquence lorsque le plateau (11) en question est un des plateaux en haut ou en bas de la pile.

10. Procédé selon la revendication 9, caractérisé en ce que ladite quantité prédéterminée de produits correspond à la quantité de produits reçus sur la moitié dudit plateau (11).
